# EUROPÄISCHE PATENTSCHRIFT

(11) **EP 3 212 575 B1**
(45) Veröffentlichungstag und Bekanntmachung des Hinweises auf die Patenterteilung: **07.03.2018**
(21) Anmeldenummer: 15791257.7
(22) Anmeldetag: 21.10.2015
(51) Int. Cl.: C01B 33/033, F23C 10/20

(54) **WIRBELSCHICHTREAKTOR UND VERFAHREN ZUR HERSTELLUNG VON POLYKRISTALLINEM SILICIUMGRANULAT**
FLUIDIZED BED REACTOR AND METHOD FOR PRODUCING POLYCRYSTALLINE SILICON GRANULES
RÉACTEUR À LIT FLUIDISÉ ET UN PROCÉDÉ DE PRODUCTION DE GRANULES DE SILICIUM POLYCRISTALLIN

(30) Priorität: 28.10.2014 DE 102014221928
(43) Veröffentlichungstag der Anmeldung: 06.09.2017
(73) Patentinhaber: Wacker Chemie AG, 81737 München (DE)
(72) Erfinder: FORSTPOINTNER, Gerhard, 84556 Kastl (DE); WECKESSER, Dirk, 84561 Mehring (DE)
(74) Vertreter: Potten, Holger
(86) Internationale Anmeldenummer: PCT/EP2015/074339
(87) Internationale Veröffentlichungsnummer: WO 2016/066488

(56) Entgegenhaltungen:
- GB-A- 2 185 008
- GrafTech International: "Grafoil Products", , 1. Januar 2007 (2007-01-01), XP055243255, Gefunden im Internet: URL:http://www.g4e.cn/wordpress/wp-content /files/graftech.pdf [gefunden am 2016-01-20]
- Pyrotek Inc: "Flexible Graphite", , 20. April 2010 (2010-04-20), XP055243232, Gefunden im Internet: URL:https://pyrotek-inc.com/documents/data sheets/942_-_Flexible_Graphite_-_E4.pdf [gefunden am 2016-01-20]
- GrafTech International: "GTA Flexible Graphite Technical Data Sheet 435", , 21. Januar 2013 (2013-01-21), XP055243059, Gefunden im Internet: URL:http://www.graftech.com/wp-content/upl oads/2015/03/TDS435-GTA.pdf [gefunden am 2016-01-20]

## Beschreibung

Die Erfindung betrifft einen Wirbelschichtreaktor und ein Verfahren zur Herstellung von polykristallinem Siliciumgranulat.

Polykristallines Silicium kann mittels des Siemens-Verfahrens hergestellt werden. Dabei wird ein Reaktionsgas umfassend eine oder mehrere Silicium enthaltende Komponenten und gegebenenfalls Wasserstoff mittels Düsen in einen Reaktor umfassend durch direkten Stromdurchgang erhitzte Trägerkörper eingeleitet, wobei sich an den Trägerkörpern Silicium in fester Form abscheidet. Als Silicium enthaltende Komponenten werden bevorzugt Silan (SiH₄), Monochlorsilan (SiH₃Cl), Dichlorsilan (SiH₂Cl₂), Trichlorsilan (SiHCl₃), Tetrachlorsilan (SiCl₄) oder Mischungen der genannten Stoffe eingesetzt.

Das Siemens-Verfahren wird üblicherweise in einem Abscheidereaktor (auch "Siemens-Reaktor" genannt) durchgeführt. In der gebräuchlichsten Ausführungsform umfasst der Reaktor eine metallische Bodenplatte und eine kühlbare Glocke, die auf die Bodenplatte gesetzt ist, so dass ein Reaktionsraum im Inneren der Glocke entsteht. In EP 2 077 252 A2 wird der typische Aufbau eines in der Herstellung von Polysilicium zum Einsatz kommenden Reaktortyps beschrieben.

Die Bodenplatte ist mit einer oder mehreren Gaseinlassöffnungen und einer oder mehreren Abgasöffnungen für Reaktionsgase sowie mit Halterungen versehen, mit deren Hilfe die Trägerkörper im Reaktionsraum gehalten und durch Elektroden mit elektrischem Strom versorgt werden. Die Zuführung von Reaktionsgas erfolgt mittels einer oder mehrerer in Gaseinlassöffnungen angebrachten Düsen.

Die Trägerkörper werden üblicherweise von je zwei sog. Dünnstäben und einer waagrechten Brücke gebildet. Durch die Brückenkopplung wird die typische U-Form der Trägerkörper erzeugt. Die Trägerkörper bestehen üblicherweise aus polykristallinem Silicium. Die Länge der Dünnstäbe, auf denen polykristallines Silicium abgeschieden wird, kann mehrere Meter betragen (üblich sind etwa 2 bis 3 m).

Polykristallines Siliciumgranulat wird in einem Wirbelschicht- bzw. Fließbettreaktor produziert. Dies geschieht durch Fluidisierung von Siliciumpartikeln mittels einer Gasströmung in einer Wirbelschicht, wobei diese über eine Heizvorrichtung auf hohe Temperaturen aufgeheizt wird. Durch Zugabe eines siliciumhaltigen Reaktionsgases erfolgt eine Abscheidereaktion an der heißen Partikeloberfläche. Dabei scheidet sich elementares Silicium auf den Siliciumpartikeln ab und die einzelnen Partikel wachsen im Durchmesser an. Durch den regelmäßigen Abzug von angewachsenen Partikeln und Zugabe kleinerer Siliciumkeimpartikel kann das Verfahren kontinuierlich mit allen damit verbundenen Vorteilen betrieben werden. Als siliciumhaltiges Eduktgas sind Silicium-Halogenverbindungen (z.B. Chlorsilane oder Bromsilane), Silan (SiH₄), sowie Mischungen dieser Gase mit Wasserstoff beschrieben.

US 4900411 A offenbart ein Verfahren zur Gewinnung hochreinen polykristallinen Siliciums durch Niederschlagung von Silicium auf hochreine Siliciumteilchen aus siliciumhaltigem Gas, wie Silan, Dichlorsilan, Trichlorsilan oder Tribromsilan, gekennzeichnet durch einen Reaktor mit einem fluidisierten Bett, in welches zusammen mit Siliciumimpfteilchen ein Reaktionsgas durch ein Einleitungsrohr eingeleitet wird, Mikrowellen zugeführt werden, um die fluidisierten Teilchen zu erhitzen, sodass sich darauf Polysilicium niederschlägt.

US 7029632 B2 offenbart einen Fließbettreaktor mit einer drucktragenden Hülle, einem inneren Reaktorrohr, das Wärmestrahlung transmittiert, einem Einlass für Siliciumpartikel, einem rohrförmigen Einlass zum Zuführen eines Reaktionsgases, der das Fließbett in eine Heizzone und eine darüber liegende Reaktionszone teilt, einer Gasverteilungseinrichtung für die Zufuhr eines Fluidisiergases in die Heizzone, einem Auslass für nicht abreagiertes Reaktionsgas, Fluidisiergas sowie die gas- oder dampfförmigen Produkte der Reaktion, einem Auslass für das Produkt, einer Heizvorrichtung sowie einer Energieversorgung für die Heizvorrichtung, wobei vorgeschlagen wird, dass die Heizvorrichtung eine Strahlungsquelle für Wärmestrahlung ist, die außerhalb des inneren Reaktorrohres und ohne direkten Kontakt zu diesem ringförmig um die Heizzone angeordnet ist und derart ausgebildet ist, dass sie mittels Wärmestrahlung die Siliciumteilchen in der Heizzone auf so eine Temperatur aufheizt, dass sich in der Reaktionszone die Reaktionstemperatur einstellt.

Heizzone und Reaktionszone sind vertikal getrennt. Dies ermöglicht es, das Fließbett auch mit anderen Heizmethoden als mit Mikrowellen zu beheizen, da es in der Heizzone zu keiner Wandabscheidung kommen kann, weil dort kein siliciumhaltiges Gas vorliegt. Es ist eine Wärmestrahlungsheizung mit flächigen Heizerelementen vorgesehen, die die Wärme gleichmäßig über den Umfang des Fließbettes und örtlich definiert einbringt.
Bei der Heizvorrichtung handelt es sich beispielsweise um Heizelemente aus dotiertem Silicium oder Graphit oder Siliciumcarbid, Quarzrohrstrahler, Keramikstrahler oder Metalldrahtstrahler. Insbesondere bevorzugt handelt es sich bei der Heizvorrichtung um ein mäanderförmig geschlitztes Rohr aus Graphit mit SiC-Oberflächenbeschichtung, das im Reaktor stehend oder hängend an den Elektrodenanschlüssen angeordnet ist.

US 4786477 A offenbart eine Vorrichtung zur Durchführung des Verfahrens, die einen Reaktor mit einem Gaseinleitungsrohr für das Reaktionsgasgemisch am unteren Ende, einem Gasauslassrohr am oberen Ende sowie einem Zuführungsrohr für die Siliciumimpfteilchen aufweist, dadurch gekennzeichnet, dass der aus Quarz bestehende Reaktor sich vertikalstehend auf der Mittellinie eines Wärmeerzeugers befindet, in welchem ein Abschirmungsschild gegen Mikrowellen im mittleren Teil installiert ist und der mit Mikrowellengeneratoren über Mikrowellenführungsrohren in Verbindung steht, wobei unterhalb des Reaktors eine Gasverteilerplatte und innerhalb jedes Mikrowellenführungsrohres eine Gasabsperrmembran angeordnet ist und dass Kühlkanäle zwischen der Wand des Wärmeerzeugers und der äußeren Wand des Reaktors sowie in der Gasverteilungsplatte vorgesehen sind.

In einer Ausgestaltung der Vorrichtung nach US 4786477 A ragt der Gasauslass nach außen durch und ist in loser Form aufgesetzt, wobei eine Graphitdichtung an der Verbindungsstelle mit dem Quarzreaktor liegt. Die Graphitdichtung wird von einem Halter gehalten, der auf der Seite des Gasauslasses liegt und der von einer Feder in axialer Richtung beaufschlagt ist. Die Verbindung wird somit durch den Federdruck über den Halter auf den Quarzreaktor in dichtender Weise gehalten, selbst dann, wenn der Reaktor sich etwas bewegt.

Das obere Teil des Wärmeerzeugers, durch das das Gasauslassrohr nach außen ragt, wird durch eine PTFE-Dichtung und einen Halter gasdicht verschlossen.
Das Gaseinleitungsrohr ist mit dem unteren Ende des Wärmeerzeugers verbunden und eine Gasverteilungsplatte ist zwischen das Gaseinlassrohr und das untere Ende des Quarzreaktors eingefügt. Ein Kühlmittelweg ist in der Gasverteilungsplatte gebildet. Ein Auslassrohr für Teilchen ist mit dem unteren Teil des Quarzreaktors verbunden und erstreckt sich zu einem Siliciumsammelbehälter. Eine Graphitdichtung verhindert den Austritt von Reaktionsgas an der Stelle zwischen dem Quarzreaktor und dem Wärmeerzeuger.
In einer anderen Ausgestaltungsform der Vorrichtung ist das obere Ende des Quarzreaktors direkt mit dem Gasauslassrohr verbunden. Das untere Ende hat eine Gasdichtung, die verhindert, dass Reaktionsgas aus dem Wärmeerzeuger entweicht, d. h. es ist ein O-Ring aus Graphit als Dichtung zwischen den Flansch des Wärmeerzeugers und dem Flansch des Quarzreaktors und der Gasverteilungsplatte eingefügt, damit völlige Gasdichtigkeit herrscht.

Im Stand der Technik wurden Anstrengungen unternommen, polykristallines Siliciumgranulat mit einer niedrigen Kontamination mit Dotierstoffen wie Bor und Phosphor bereit zu stellen.

US 4883687 A offenbart polykristallines Siliciumgranulat mit einer Größenverteilung von 150 bis 1500 µm, einer durchschnittlichen Größe von 650 bis 750 µm, einem Borgehalt von nicht mehr als 0,25 ppba, einem Phosphorgehalt von nicht mehr als 0,19 ppba. Dieses Siliciumgranulat wird hergestellt, indem in einem ersten Schritt eine Abscheidung von Silicium auf Siliciumteilchen bei einer Silankonzentration von 10 bis 100 mol.-% erfolgt, wobei Siliciumstaub gebildet wird, und wobei im zweiten Schritt die aus dem ersten Schritt erhaltenen Siliciumteilchen einer Abscheidung bei einer Silankonzentration von 1 bis 5 mol-% zugeführt werden, wodurch der Siliciumstaub auf den Teilchen gebunden wird.

US 7708828 B2 offenbart polykristallines Siliciumgranulat mit niedrigem Porenanteil und mit einen Dotierstoffgehalt an Phosphor kleiner als 300 ppta, bevorzugt kleiner als 150 ppta und mit einem Dotierstoffgehalt an Bor kleiner als 300 ppta, bevorzugt kleiner als 100 ppta. Über die Kontamination der Oberfläche des Granulats mit Dotierstoffen gibt EP1544167 A1 keine Auskunft.

WO 2006/062660 A2 offenbart polykristallines Siliciumgranulat mit einem durchschnittlichen Bor- und Phosphorgehalt von jeweils nicht mehr als 0,1 ppba.

US2003/0159647 A1 offenbart polykristalline Siliciumbruchstücke mit Verunreinigungen von kleiner oder gleich 0,06 ppba Bor und von kleiner oder gleich 0,02 ppba Phosphor im Bulk. Über die Kontamination der Oberfläche mit Dotierstoffen gibt US2003/0159647 A1 keine Auskunft.

US 2013/0189176 A1 offenbart ein polykristallines Siliciumstück mit einer Konzentration von 1-50 ppta Bor und 1-50 ppta Phosphor an der Oberfläche. Diese vergleichsweise niedrigen Dotierstoffkonzentrationen werden durch eine Vielzahl an Maßnahmen wie destillative Reinigung der Reaktionsgase, Verwendung von dotierstoffarmen Reinraumfiltern sowie Verwendung dotierstoffarmer Auskleidungen der Anlagen usw. erreicht.

Für die Reinheit von polykristallinem Siliciumgranulat und polykristallinen Siliciumbruchstücken sind der Dotierstoffgehalt der verwendeten Reaktionsgase und des beim Wirbelschichtverfahren verwendeten Fluidisierungsgases von Bedeutung.

US 2012/0193214 A1 offenbart daher ein Verfahren zur destillativen Reinigung von Chlorsilanen, wobei Bor- und Phosphorverunreinigungen abgetrennt werden.

US 4871524 A offenbart ein Verfahren, bei dem Wasserstoffabgas aus einem Wirbelschichtreaktor mit Aktivkohle in Kontakt gebracht wird, wodurch Phosphor enthaltende Verunreinigungen aus dem Wasserstoff entfernt werden. Der derart gereinigte Wasserstoff kann dem Reaktor wieder zugeführt werden und als Trägergas für Silane dienen.

Trotz aller Anstrengungen im Stand der Technik zur Reduzierung der Dotierstoffkonzentration weisen polykristallines Siliciumgranulat und polykristallines Siliciumbruchstücke bislang signifikante Verunreinigungen insbesondere mit Phosphor auf.

Aus der beschriebenen Problematik ergab sich die Aufgabenstellung der Erfindung.

Die Erfindung sieht vor, Dichtungen und/oder Packungen aus Graphit, die weniger als 500 ppmw Phosphor enthalten, in der Medienversorgung, in den Wirbelschichtreaktoren und in der Abgasentsorgung von Wirbelschichtreaktoren zur Herstellung von polykristallinem Siliciumgranulat einzusetzen.

Ebenso ist es vorgesehen, Dichtungen und/oder Packungen aus Graphit, die weniger als 500 ppmw Phosphor enthalten, in der Medienversorgung, in CVD-Reaktoren und in der Abgasentsorgung von CVD-Reaktoren zur Herstellung von polykristallinem Silicium in Stabform einzusetzen (Siemensprozess). Zum einen werden dabei vorzugweise die eine oder die mehreren Düsen in den Gaseinlassöffnungen in der Bodenplatte abgedichtet. Zum anderen werden vorzugweise die Rohrleitungen für Reaktionsgase (Wasserstoff, Chlorsilane) abgedichtet. Ebenso wird vorzugweise die Abgasöffnung in der Bodenplatte abgedichtet, die mit einer Rohrleitung verbunden ist.

Die Erfinder haben erkannt, dass Dichtungen und Packungen, die in Rohrleitungen zur Förderung von Feedgasen und -flüssigkeiten (H₂, Trichlorsilan, HCl) sowie in Abscheideapparaten zur Herstellung von hochreinem Polysilicium eingesetzt werden, unter bestimmten Bedingungen (z. B. bei erhöhtem Druck und/oder bei erhöhter Temperatur, bei hoher Strömungsgeschwindigkeit, in Anwesenheit von korrosiven Medien) zur Kontamination der durchgeleiteten Gase, Flüssigkeiten und Produkte führen können. Bei der Abscheidung zu hochreinem Silicium wird ein Teil dieser Verunreinigungen aus den Dichtungen in das Polysilicium eingebaut. Durch die Verwendung besonders phosphorarmer Dichtungen kann dies vermieden werden.

Die Erfindung betrifft auch einen Wirbelschichtreaktor zur Herstellung von polykristallinem Siliciumgranulat, umfassend einen Reaktorkopf(10), ein Reaktorrohr (3) und einen Reaktorboden (9), weiterhin umfassend eine Heizvorrichtung, wenigstens eine Bodengasdüse zur Zuführung von Fluidisierungsgas (2) sowie wenigstens eine Sekundärgasdüse zur Zuführung von Reaktionsgas (1), eine Seedzuführeinrichtung (4), um Silicium-Keimpartikel zuzuführen, eine Produktentnahmeleitung (5) für polykristallines Siliciumgranulat sowie eine Einrichtung zum Abführen von Abgas (6), dadurch gekennzeichnet, dass Bodengasdüse, die wenigstens eine Sekundärgasdüse sowie die Produktentnahmeleitung (5) für polykristallines Siliciumgranulat mittels Dichtungen / Packungen (8) gegenüber dem Reaktorboden (9) abgedichtet sind und dass das Reaktorrohr (3) gegenüber dem Reaktorkopf (10) und dem Reaktorboden (9) mittels Dichtungen (7) abgedichtet ist, wobei die Dichtungen aus Graphit bestehen und weniger als 500 ppmw Phosphor enthalten.

Vorzugweise werden Dichtungen aus Graphit, die weniger als 500 ppmw Phosphor enthalten, auch in Rohrleitungen zur Medienversorgung oder Medienentsorgung eingesetzt. Dies betrifft Rohrleitungen, die den Reaktor mit Fluidisierungsgas (insb. Wasserstoff) oder mit Reaktionsgas (insb. Chlorsilangemische) versorgen. Zudem betrifft es die Abgasrohrleitungen, mit denen Abgase aus dem Reaktor abgeführt werden. Die Dichtungen werden dabei insbesondere zur Abdichtung von Flanschverbindungen eingesetzt.

Vorzugweise enthalten die erfindungsgemäß eingesetzten Dichtungen weniger als 5 ppmw B, As und Sb (in Summe). Dadurch ist sichergestellt, dass nur sehr geringe Mengen an den Dotierstoffen B, As und Sb aus den Dichtungen heraustreten und das polykristalline Siliciumgranulat verunreinigen können.

Vorzugweise enthalten die Dichtungen weniger als 1400 ppmw Schwefel. Es ist bekannt, dass Schwefel ein natürlicher Bestandteil von Graphit ist. Durch Reinigung und Aufarbeitung des Graphits kann der Schwefelgehalt auf das o.g. Niveau reduziert werden.

Vorzugweise enthalten die Dichtungen einen Aschegehalt von weniger als 0,3 Gew.-% (ermittelt gemäß DIN 51903). Der Aschegehalt spiegelt den Gesamtverunreinigungsgrad des Graphits mit Metallen wieder. Der Graphit wird bei 800°C unter oxidierender Atmosphäre verbrannt und dann die übrig bleibende Aschemenge verwogen und ins Verhältnis zur Ausgangsmenge gesetzt. Unbehandelter Graphit hat üblicherweise einen Aschegehalt von bis zu 2 Gew.-%. Durch Reinigung und Aufarbeitung kann der Aschegehalt reduziert werden.

Besonders bevorzugt werden Dichtungen aus Graphit mit P < 100 ppmw, S < 1000 ppmw, B, As, Sb (in Summe) < 1 ppmw und einem Aschegehalt < 0,1 Gew.-%.

Graphit für Packungen und Packungsringe enthält vorzugweise weniger als 20 ppmw Phosphor sowie einen Aschegehalt von kleiner 0,25 Gew.-%.

Besonders bevorzugt werden hochreine Dichtungen oder Packungsringe aus Graphit verwendet mit einem P-Gehalt von weniger als 1 ppmw und einer Verunreinigung mit Al, As, B, Ba, Be, Bi, Ca, Cd, Co, Cr, Cu, Fe, K, Li, Mg, Mn, Mo, Na, Ni, Pb, Sb, S, Sn, Sr, Ti, V, W, Zn in Summe von weniger als 5 ppmw.

Damit ist sichergestellt, dass nur sehr geringe Mengen an Phosphor und den genannten Metallen aus den Dichtungen heraustreten und das polykristalline Siliciumgranulat verunreinigen können.

Es ist von Vorteil, wenn die zur Wicklung von Packungen verwendete Graphitfolie einen gewissen Gehalt an Phosphor aufweist, da Phosphor den Graphit elastischer macht.

Die Ermittlung der Elementkonzentrationen erfolgte mittels ETV-ICP/OES (Probenzuführung mittels elektrothermische Verdampfung/ETV; ICP-OES= "inductively coupled plasma optical emission spectrometry).

Bei den Dichtungen kann es sich um Flachdichtungen (nach DIN EN1514-1) oder um Dichtungs- bzw. Packungsringe (Packungen) handeln.

Zur Abdichtung der Düsen und der Entnahmeleitung für Granulat werden vorzugweise ringförmig um die Düsen oder die Leitung umlaufende Dichtungs- oder Packungsringe verwendet.

Die phosphorarmen Graphitdichtungen werden bevorzugt in Anlagenkomponenten und Rohrleitungen eingesetzt, welche bei Temperaturen von 150°C bis 900°C betrieben werden.

Besonders bevorzugt eingesetzt werden die Dichtungen im Temperaturbereich von 200°C bis 550°C.

Die phosphorarmen Graphitdichtungen werden bevorzugt in Anlagenkomponenten und Rohrleitungen eingesetzt, welche bei Überdrücken von 1 bis 16 bar betrieben werden.

Bei Anwendungstemperaturen oberhalb von 450°C werden die Dichtungen aus Graphit bevorzugt mit Innen- und Außenbördel aus Edelstahl (z. B. X6CrNiMoTi17-12-2, Werkstoff-Nr. 1.4571) eingesetzt, um das Dichtungsmaterial vor direktem Kontakt mit Luftsauerstoff zu schützen und damit Oxidation des Kohlenstoffs zu Kohlendioxid zu vermeiden. Der verwendete Edelstahl weist vorzugweise einen Phosphorgehalt von maximal 0,045 Gew.-% und einen Schwefelgehalt von maximal 0,03 Gew.-% auf.

Bei Anwendungstemperaturen von mehr als 600°C unter Wasserstoffatmosphäre werden die Dichtungen vorzugweise innen und außen gekammert ausgeführt, um eine Methanisierung des Kohlenstoffs mit Wasserstoff zu verhindern.

Die Dichtungen zeichnen sich aus durch einen reduzierten Gehalt an Fremdelementen im Dichtungswerkstoff, welche im Polysilicium besonders störend wirken.

Insbesondere ist der zum Einsatz kommende Dichtungswerkstoff Graphit dadurch gekennzeichnet, dass für die Elemente B, P, Al, As, Sb, S und Aschegehalt definiert niedrige Grenzwerte eingehalten werden.

Trotz reduziertem P-Gehalt im Graphit bleiben die physikalisch-mechanischen Dichtungskennwerte nach DIN EN 13555 erhalten, wie z.B. die Flächenpressung im Einbauzustand für Leckageklasse L=0,001, so dass der Einsatz der Dichtungen in der Praxis keinerlei Probleme bereitet.

Auch bei erhöhten Einsatztemperaturen zeigen die Dichtungen eine sehr niedrige P-Diffusionsrate aus dem Graphit-Dichtungsmaterial in das Medium (z. B. Wasserstoff, Chlorsilan oder Produkt).

Die Erfindung betrifft auch ein Verfahren zur Herstellung von polykristallinem Siliciumgranulat in einem der zuvor beschriebenen Wirbelschichtreaktoren, umfassend Fluidisierung von Siliciumkeimpartikeln mittels einer Gasströmung in einer Wirbelschicht, die mittels einer Heizvorrichtung aufgeheizt wird, wobei durch Zugabe eines siliciumhaltigen Reaktionsgases polykristallines Silicium an den heißen Siliciumkeimpartikeloberflächen abgeschieden wird, wodurch das polykristalline Siliciumgranulat entsteht.

Vorzugweise wird das entstehende polykristalline Siliciumgranulat aus dem Wirbelschichtreaktor abgeführt.

Vorzugweise wird das Verfahren kontinuierlich betrieben, indem durch Abscheidung im Durchmesser angewachsene Partikel aus dem Reaktor abgeführt und frische Siliciumkeimpartikel zudosiert werden.

Vorzugweise wird als siliciumhaltiges Reaktionsgas Trichlorsilan verwendet. Die Temperatur der Wirbelschicht im Reaktionsbereich beträgt in diesem Fall vorzugweise 850-1400 °C.

Ebenso bevorzugt ist es, als siliciumhaltiges Reaktionsgas Silan (SiH₄) einzusetzen. Die Temperatur der Wirbelschicht im Reaktionsbereich beträgt vorzugweise 550-850 °C.

Weiterhin ist es bevorzugt, als siliciumhaltiges Reaktionsgas Dichlorsilan einzusetzen. Die Temperatur der Wirbelschicht im Reaktionsbereich beträgt vorzugweise 600-1000 °C.

Beim Fluidisierungsgas handelt es sich vorzugsweise um Wasserstoff.

Das Reaktionsgas wird über eine oder mehrere Düsen in die Wirbelschicht eingedüst. Die lokalen Gasgeschwindigkeiten am Austritt der Düsen betragen vorzugsweise 0,5 bis 200 m/s.

Die Konzentration des siliciumhaltigen Reaktionsgases beträgt bezogen auf die gesamte durch die Wirbelschicht strömende Gasmenge vorzugsweise 5 mol-% bis 50 mol-%, besonders bevorzugt 15 mol-% bis 40 mol-%.

Die Konzentration des siliciumhaltigen Reaktionsgases in den Reaktionsgasdüsen beträgt bezogen auf die gesamte durch die Reaktionsgasdüsen strömende Gasmenge vorzugsweise 20 mol-% bis 80 mol-%, besonders bevorzugt 30 mol-% bis 60 mol-%. Als siliciumhaltiges Reaktionsgas kommt vorzugweise Trichlorsilan zum Einsatz.

Der Reaktordruck bewegt sich im Bereich von 0 bis 7 barü, vorzugsweise im Bereich 0,5 bis 4,5 bar Überdruck.

Bei einem Reaktor mit einem Durchmesser von z. B. 400 mm beträgt der Massenstrom an siliciumhaltigem Reaktionsgas vorzugsweise 200 bis 600 kg/h. Der Wasserstoffvolumenstrom beträgt vorzugsweise 100 bis 300 Nm³/h. Für größere Reaktoren sind höhere Mengen an siliciumhaltigem Reaktionsgas und H₂ bevorzugt.

Dem Fachmann ist klar, dass einige Prozessparameter idealerweise abhängig von der Reaktorgröße ausgewählt werden. Daher sind im Folgenden auf die Reaktorquerschnittsfläche normierte Betriebsdaten genannt, in denen das erfindungsgemäße Verfahren vorzugweise angewendet wird.

Der spezifische Massenstrom an siliciumhaltigem Reaktionsgas beträgt vorzugsweise 1600- 6500 kg/(h*m²).

Der spezifische Wasserstoffvolumenstrom beträgt vorzugsweise 800-4000 Nm³/(h*m²).

Das spezifische Bettgewicht beträgt vorzugsweise 700-2000 kg/m².

Die spezifische Siliciumkeimpartikeldosierrate beträgt vorzugsweise 7-25 kg/(h*m²).

Die spezifische Reaktorheizleistung beträgt vorzugsweise 800-3000 kW/m².

Die Verweilzeit des Reaktionsgases in der Wirbelschicht beträgt vorzugsweise 0,1 bis 10 s, besonders bevorzugt 0,2 bis 5 s.

Die bezüglich der vorstehend aufgeführten Ausführungsformen des erfindungsgemäßen Verfahrens / der erfindungsgemäßen Verwendung angegebenen Merkmale können entsprechend auf die erfindungsgemäße Vorrichtung übertragen werden. Umgekehrt können die bezüglich der vorstehend ausgeführten Ausführungsformen der erfindungsgemäßen Vorrichtung angegebenen Merkmale entsprechend auf das erfindungsgemäße Verfahren / die erfindungsgemäßen Verwendung übertragen werden. Diese und andere Merkmale der erfindungsgemäßen Ausführungsformen werden in der Figurenbeschreibung und in den Ansprüchen erläutert. Die einzelnen Merkmale können entweder separat oder in Kombination als Ausführungsformen der Erfindung verwirklicht werden. Weiterhin können sie vorteilhafte Ausführungen beschreiben, die selbstständig schutzfähig sind.

### Kurzbeschreibung der Figur

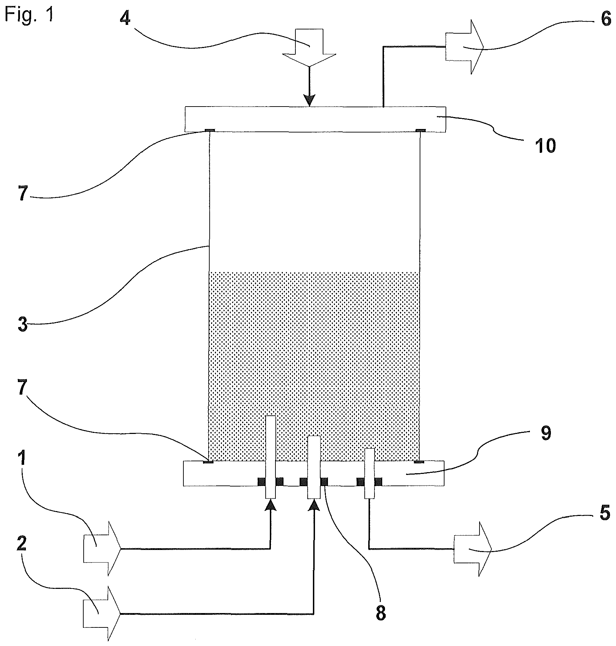

- **Fig. 1**: zeigt den schematischen Aufbau eines Wirbelschichtreaktors.
- **Fig. 2**: zeigt eine Ausführungsform einer Dichtung.

### Bezugszeichenliste

- **1**: Reaktionsgas
- **2**: Fluidisierungsgas
- **3**: Reaktorrohr
- **4**: Seedzufuhr
- **5**: Produktentnahmeleitung
- **6**: Abgas
- **7**: Dichtung
- **8**: Dichtung / Packung
- **9**: Reaktorboden
- **10**: Reaktorkopf
- **11**: Dichtungswerkstoff
- **12**: Außenbördel
- **13**: Innenbördel
- **14**: Trägerblech

Der Wirbelschichtreaktor besteht aus einem Reaktorbehälter, in den ein Reaktorrohr **3** eingesetzt ist und der nach oben durch den Reaktorkopf **10** und nach unten durch den Reaktorboden **9** begrenzt wird.

Zwischen einer Innenwand des Reaktorbehälters und der Außenwand des Reaktorrohrs **3** kann sich ein Zwischenmantel befinden. Ein solcher Zwischenmantel beinhaltet Isolationsmaterial und ist mit einem Inertgas gefüllt bzw. wird mit einem Inertgas gespült. Der Druck im Zwischenmantel kann höher sein als im Reaktionsraum, der durch die Wandungen des Reaktorrohrs **3** begrenzt wird.

Im Inneren des Reaktorrohres **3** befindet sich die Wirbelschicht aus PolysiliciumGranulat.

Als Zugase werden dem Reaktor das Fluidisierungsgas **2** und das Reaktionsgasgemisch **1** zugeführt.

Das Fluidisierungsgas 2 wird über Bodengasdüsen und das Reaktionsgasgemisch 1 über sog. Sekundärgasdüsen (Reaktionsgasdüsen) zugeführt.

Die Höhe der Sekundärgasdüsen kann sich von der Höhe der Bodengasdüsen unterscheiden.

Im Reaktor bildet sich durch die Anordnung der Düsen eine blasenbildende Wirbelschicht mit zusätzlicher vertikaler Sekundärgaseindüsung aus.

Der Reaktorkopf **10** kann einen größeren Querschnitt als die Wirbelschicht haben.

Über eine Seedzuführeinrichtung **4** wird dem Reaktor Seed am Reaktorkopf **10** zugeführt.

Das polykristalline Siliciumgranulat wird über eine Produktentnahmeleitung **5** am Reaktorboden **9** entnommen.

Am Reaktorkopf **10** wird das Reaktorabgas **6** abgezogen.

Die Bodengasdüsen, Sekundärgasdüsen sowie die Produktentnahmeleitung **5** für polykristallines Siliciumgranulat sind mittels Dichtungen / Packungen **8** gegenüber dem Reaktorboden **9** abgedichtet. Dabei handelt es sich vorzugweise um Packungsringe.

Das Reaktorrohr **3** ist gegenüber dem Reaktorkopf **10** und dem Reaktorboden **9** mittels Dichtungen **7** abgedichtet. Dabei handelt es sich vorzugweise um Flachdichtungen.

Die Dichtungen / Packungen **7,8** bestehen aus Graphit und enthalten weniger als 500 ppmw Phosphor.

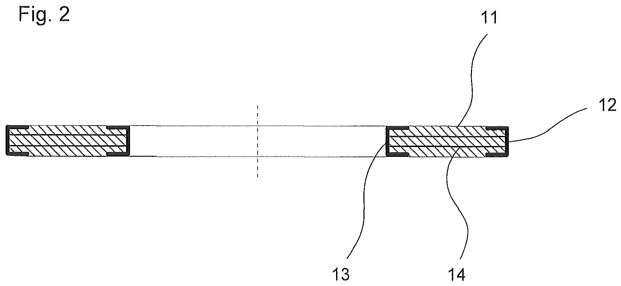

**Fig. 2** zeigt eine Ausführung einer Flachdichtung mit Dichtungswerkstoff **11**, Außenbördel **12**, Innenbördel **13** und Trägerblech **14**.

Außenbördel **12** und Innenbördel **13** bestehen aus Edelstahl.

Der Dichtungswerkstoff **11** ist Graphit enthaltend weniger als 500 ppm Phosphor.

### Beispiele

Es wurde untersucht, welchen Einfluss die phosphorarmen Dichtungen und Packungsringe auf die Produktqualität haben. Dazu wurden vergleichsweise Dichtungen und Packungsringe aus Standardgraphit mit schwankendem P-Gehalt von bis zu 1000 ppm eingesetzt.

Zunächst wurden die Dichtungen für Rohrleitungen untersucht.

In einer Rohrleitung zur Förderung von 500°C heißem Wasserstoff zu einem Abscheidereaktor für Polysilicium wurden die Dichtungen aus Standardgraphit mit Edelstahlinnen- und außenbördel gegen Dichtungen aus hochreinem phosphorarmen Graphit (P-Gehalt weniger als 500 ppmw) mit Edelstahlinnenbördel und Edelstahlaußenbördel ersetzt.

In einer zweiten Rohrleitung zur Förderung von 300°C heißem Trichlorsilan zu einem Abscheidereaktor für Polysilicium wurden die Dichtungen aus Standardgraphit mit Edelstahlinnenbördel gegen Dichtungen aus phosphorarmem Graphit mit Edelstahlinnenbördel ersetzt.

Durch den Ersatz der Standarddichtungen durch phosphorarme Graphitdichtungen konnte die Produktqualität des Polysiliciumgranulats verbessert werden, da der P-Gehalt um 12% gesenkt wurde.

Schließlich wurden im zweiten Schritt die Dichtungen zur Abdichtung von Reaktorrohr gegenüber Reaktorboden und Reaktorkopf untersucht.

Zur Abdichtung eines Wirbelschichtreaktionsrohres zur Abscheidung von Polysiliciumgranulat werden hochtemperaturbeständige Dichtungen aus Standardgraphit verwendet. Nachdem diese Dichtungen mit dem phosphorarmen Spezialgraphit (P-Gehalt weniger als 500 ppmw) ausgeführt wurden, konnte der P-Gehalt im Polysiliciumgranulat um weitere 12% gesenkt werden.

Im dritten Schritt wurden die Packungsringe zur Abdichtungen der Düsen bzw. der Gasdurchführungen durch den Reaktorboden untersucht.

Zur Abdichtung von Gasdurchführungen in einen Wirbelschichtreaktor zur Herstellung von hochreinem Si-Granulat werden Standardgraphitpackungen verwendet. Durch den Einsatz von Packungsringen aus Spezialgraphit mit besonders niedrigem P-Gehalt (< 1 ppmw) konnte der P-Gehalt des Polysiliciumgranulat um 10% gesenkt werden.

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen sowie Äquivalente durch den Schutzbereich der Ansprüche abgedeckt sein.

## Patentansprüche

1. Wirbelschichtreaktor zur Herstellung von polykristallinem Siliciumgranulat, umfassend einen Reaktorkopf(10), ein Reaktorrohr (3) und einen Reaktorboden (9), weiterhin umfassend eine Heizvorrichtung, wenigstens eine Bodengasdüse zur Zuführung von Fluidisierungsgas (2) sowie wenigstens eine Sekundärgasdüse zur Zuführung von Reaktionsgas (1), eine Seedzuführeinrichtung (4), um Silicium-Keimpartikel zuzuführen, eine Produktentnahmeleitung (5) für polykristallines Siliciumgranulat sowie eine Einrichtung zum Abführen von Abgas (6), **dadurch gekennzeichnet, dass** Bodengasdüse, die wenigstens eine Sekundärgasdüse sowie die Produktentnahmeleitung (5) für polykristallines Siliciumgranulat mittels Dichtungen / Packungen (8) gegenüber dem Reaktorboden (9) abgedichtet sind und dass das Reaktorrohr (3) gegenüber dem Reaktorkopf (10) und dem Reaktorboden (9) mittels Dichtungen (7) abgedichtet ist, wobei die Dichtungen / Packungen (7,8) aus Graphit bestehen und weniger als 500 ppmw Phosphor enthalten.

2. Wirbelschichtreaktor nach Anspruch 1, wobei die Dichtungen / Packungen (7,8) weniger als 5 ppmw an Bor, Arsen und Antimon in Summe enthalten.

3. Wirbelschichtreaktor nach Anspruch 1 oder nach Anspruch 2, wobei die Dichtungen / Packungen (7,8) weniger als 1400 ppmw Schwefel enthalten.

4. Wirbelschichtreaktor nach einem der Ansprüche 1 bis 3, wobei die Dichtungen / Packungen (7,8) einen Aschegehalt von weniger als 0,3 Gew.-% aufweisen.

5. Wirbelschichtreaktor nach Anspruch 4, wobei die Dichtungen / Packungen (7,8) weniger als 100 ppmw Phosphor, weniger als 1000 ppmw Schwefel, weniger als 1 ppmw an Bor, Arsen und Antimon in Summe enthalten und einen Aschegehalt von weniger als 0,1 Gew.-% aufweisen.

6. Wirbelschichtreaktor nach einem der Ansprüche 1 bis 5, wobei die Dichtungen / Packungen (7,8) weniger als 1 ppmw Phosphor und weniger als 5 ppmw an Verunreinigung mit Al, As, B, Ba, Be, Bi, Ca, Cd, Co, Cr, Cu, Fe, K, Li, Mg, Mn, Mo, Na, Ni, Pb, S, Sb, Sn, Sr, Ti, V, W, Zn in Summe enthalten.

7. Verfahren zur Herstellung von polykristallinem Siliciumgranulat, das in einem Wirbelschichtreaktor nach einem der Ansprüche 1 bis 6 durchgeführt wird, umfassend Fluidisierung von Siliciumkeimpartikeln mittels einer Gasströmung in einer Wirbelschicht, die mittels einer Heizvorrichtung aufgeheizt wird, wobei durch Zugabe eines siliciumhaltigen Reaktionsgases polykristallines Silicium an den heißen Siliciumkeimpartikeloberflächen abgeschieden wird, wodurch das polykristalline Siliciumgranulat entsteht.

8. Verfahren nach Anspruch 7, wobei als siliciumhaltiges Gas Trichlorsilan verwendet und die Wirbelschicht auf eine Temperatur von 850-1400 °C aufgeheizt wird.

9. Verfahren nach Anspruch 7, wobei als siliciumhaltiges Gas Silan verwendet und die Wirbelschicht auf eine Temperatur von 550-850 °C aufgeheizt wird.

10. Verfahren nach Anspruch 7, wobei als siliciumhaltiges Gas Dichlorsilan verwendet und die Wirbelschicht auf eine Temperatur von 600-1000 °C aufgeheizt wird.

11. Verwendung von Dichtungen und/oder Packungen aus Graphit, die weniger als 500 ppmw Phosphor enthalten, in Wirbelschichtreaktoren zur Herstellung von polykristallinem Siliciumgranulat sowie in der Medienversorgung und Abgasentsorgung von Wirbelschichtreaktoren zur Herstellung von polykristallinem Siliciumgranulat.

12. Verwendung von Dichtungen und/oder Packungen aus Graphit, die weniger als 500 ppmw Phosphor enthalten, in der Medienversorgung und Abgasentsorgung von Wirbelschichtreaktoren zur Herstellung von polykristallinem Siliciumgranulat.

## Claims

1. Fluidized bed reactor for producing polycrystalline silicon granules, comprising a reactor head (10), a reactor tube (3) and a reactor base (9), additionally comprising a heating device, at least one base gas nozzle for supplying fluidizing gas (2) and also at least one secondary gas nozzle for supplying reaction gas (1), a seed feed appliance (4), in order to feed silicon seed particles, a product withdrawal line (5) for polycrystalline silicon granules and also an appliance for removing off-gas (6), wherein base gas nozzle, the at least one secondary gas nozzle and also the product withdrawal line (5) for polycrystalline silicon granules are sealed by means of seals/packings (8) against the reactor base (9) and the reactor tube (3) is sealed against the reactor head (10) and the reactor base (9) by means of seals (7), wherein the seals/packings (7, 8) consist of graphite and contain less than 500 ppmw of phosphorus.

2. Fluidized bed reactor according to Claim 1, wherein the seals/packings (7, 8) contain less than 5 ppmw of boron, arsenic and antimony in total.

3. Fluidized bed reactor according to Claim 1 or according to Claim 2, wherein the seals/packings (7,8) contain less than 1400 ppmw of sulfur.

4. Fluidized bed reactor according to any one of Claims 1 to 3, wherein the seals/packings (7,8) have an ash content of less than 0.3% by weight.

5. Fluidized bed reactor according to Claim 4, wherein the seals/packings (7, 8) contain less than 100 ppmw of phosphorus, less than 1000 ppmw of sulfur, less than 1 ppmw of boron, arsenic and antimony in total and have an ash content of less than 0.1% by weight.

6. Fluidized bed reactor according to any one of Claims 1 to 5, wherein the seals/packings (7, 8) contain less than 1 ppmw of phosphorus and less than 5 ppmw of impurities containing Al, As, B, Ba, Be, Bi, Ca, Cd, Co, Cr, Cu, Fe, K, Li, Mg, Mn, Mo, Na, Ni, Pb, S, Sb, Sn, Sr, Ti, V, W, Zn in total.

7. Process for producing polycrystalline silicon granules that is carried out in a fluidized bed reactor according to any one of Claims 1 to 6, comprising fluidizing silicon seed particles by means of a gas stream in a fluidized bed which is heated up by means of a heating device, wherein, by adding a silicon-containing reaction gas, polycrystalline silicon is deposited on the hot silicon seed particle surfaces, whereby the polycrystalline silicon granules are formed.

8. Process according to Claim 7, wherein the silicon-containing gas used is trichlorosilane and the fluidized bed is heated up to a temperature of 850-1400°C.

9. Process according to Claim 7, wherein the silicon-containing gas used is silane and the fluidized bed is heated up to a temperature of 550-850°C.

10. Process according to Claim 7, wherein the silicon-containing gas used is dichlorosilane and the fluidized bed is heated up to a temperature of 600-1000°C.

11. Use of seals and/or packings made of graphite which contain less than 500 ppmw of phosphorus in fluidized bed reactors for producing polycrystalline silicon granules and also in the media supply and off-gas disposal of fluidized bed reactors for producing polycrystalline silicon granules.

12. Use of seals and/or packings made of graphite which contain less than 500 ppmw of phosphorus in the media supply and off-gas disposal of fluidized bed reactors for producing polycrystalline silicon granules.

## Revendications

1. Réacteur à lit fluidisé pour la fabrication d'un granulat de silicium polycristallin, comprenant une tête de réacteur (10), un tube de réacteur (3) et un fond de réacteur (9), comprenant en outre un dispositif de chauffage, au moins une buse de gaz de fond pour l'introduction d'un gaz de fluidisation (2), ainsi qu'au moins une buse de gaz secondaire pour l'introduction d'un gaz de réaction (1), un dispositif d'introduction de germes (4), pour l'introduction de particules germes de silicium, une conduite de soutirage de produit (5) pour le granulat de silicium polycristallin, ainsi qu'un dispositif pour le déchargement d'un gaz d'échappement (6), **caractérisé en ce que** la buse de gaz de fond, ladite au moins une buse de gaz secondaire et la conduite de soutirage de produit (5) pour le granulat de silicium polycristallin sont étanchéifiées vis-à-vis du fond de réacteur (9) au moyen de joints/garnissages (8), et **en ce que** le tube de réacteur (3) est étanchéifié vis-à-vis de la tête de réacteur (10) et du fond de réacteur (9) au moyen de joints (7), les joints/garnissages (7, 8) étant constitués de graphite et contenant moins de 500 ppm en poids de phosphore.

2. Réacteur à lit fluidisé selon la revendication 1, dans lequel les joints/garnissages (7, 8) contiennent moins de 5 ppm en poids de bore, d'arsenic et d'antimoine au total.

3. Réacteur à lit fluidisé selon la revendication 1 ou selon la revendication 2, dans lequel les joints/garnissages (7, 8) contiennent moins de 1 400 ppm en poids de soufre.

4. Réacteur à lit fluidisé selon l'une quelconque des revendications 1 à 3, dans lequel les joints/garnissages (7, 8) présentent une teneur en cendres de moins de 0,3 % en poids.

5. Réacteur à lit fluidisé selon la revendication 4, dans lequel les joints/garnissages (7, 8) contiennent moins de 100 ppm en poids de phosphore, moins de 1 000 ppm en poids de soufre, moins de 1 ppm en poids de bore, d'arsenic et d'antimoine au total, et présentent une teneur en cendres de moins de 0,1 % en poids.

6. Réacteur à lit fluidisé selon l'une quelconque des revendications 1 à 5, dans lequel les joints/garnissages (7, 8) contiennent moins de 1 ppm en poids de phosphore et moins de 5 ppm en poids de contamination avec Al, As, B, Ba, Be, Bi, Ca, Cd, Co, Cr, Cu, Fe, K, Li, Mg, Mn, Mo, Na, Ni, Pb, S, Sb, Sn, Sr, Ti, V, W, Zn au total.

7. Procédé de fabrication d'un granulat de silicium polycristallin, qui est réalisé dans un réacteur à lit fluidisé selon l'une quelconque des revendications 1 à 6, comprenant la fluidisation de particules germes de silicium au moyen d'un courant gazeux dans un lit fluidisé, qui est chauffé au moyen d'un dispositif de chauffage, du silicium polycristallin étant déposé sur les surfaces des particules germes de silicium chaudes par ajout d'un gaz de réaction contenant du silicium, et le granulat de silicium polycristallin étant ainsi formé.

8. Procédé selon la revendication 7, dans lequel du trichlorosilane est utilisé en tant que gaz contenant du silicium et le lit fluidisé est porté à une température de 850 à 1 400 °C.

9. Procédé selon la revendication 7, dans lequel du silane est utilisé en tant que gaz contenant du silicium et le lit fluidisé est porté à une température de 550 à 850 °C.

10. Procédé selon la revendication 7, dans lequel du dichlorosilane est utilisé en tant que gaz contenant du silicium et le lit fluidisé est porté à une température de 600 à 1 000 °C.

11. Utilisation de joints et/ou de garnissages en graphite, qui contiennent moins de 500 ppm en poids de phosphore, dans des réacteurs à lit fluidisé pour la fabrication d'un granulat de silicium polycristallin, ainsi que dans l'approvisionnement en matériaux et l'évacuation des gaz d'échappement de réacteurs à lit fluidisé pour la fabrication d'un granulat de silicium polycristallin.

12. Utilisation de joints et/ou de garnissages en graphite, qui contiennent moins de 500 ppm en poids de phosphore, dans l'approvisionnement en matériaux et l'évacuation des gaz d'échappement de réacteurs à lit fluidisé pour la fabrication d'un granulat de silicium polycristallin.
